# EUROPEAN PATENT APPLICATION

(11) **EP 2 014 947 A1**
(43) Date of publication of application: **14.01.2009**
(21) Application number: 08012242.7
(22) Date of filing: 07.07.2008
(51) Int. Cl.: F16D 55/48

(54) **Servo disc brake device**

(30) Priority: 11.07.2007 JP 2007181767
(71) Applicant: Akebono Brake Industry CO., LTD., Tokyo 103-8534 (JP)
(72) Inventor: Sekiguchi, Akihiko, Tokyo 103-8534 (JP)
(74) Representative: Grünecker, Kinkeldey, Stockmair & Schwanhäusser Anwaltssozietät

(57) **Abstract**

An inner pad pressing mechanism 8 is attached with a servo mechanism 7 for amplifying and converting a brake torque generated in a circumferential direction of a rotor 5 upon pressing an inner pad 3 into a pressing force for pressing the pads toward the rotor 5 in an axial direction. The servo mechanism 7 is configured such that a pair of members 9 and 12 having slope surfaces 9A and 12A relatively moving in the circumferential direction of the rotor 5 is combined with a roller 10 disposed between the slope surfaces 9A and 12A.

## Description

### BACKGROUND OF THE INVENTION

### <FIELD OF THE INVENTION>

The present invention relates to a servo disc brake device mounted in a floating caliper disc brake apparatus for performing a brake operation by pressing an inner pad and an outer pad toward a rotor by a caliper body including an inner pad pressing mechanism.

### <BACKGROUND ART>

In a disc brake apparatus of a vehicle, there is a known floating caliper disc brake apparatus for performing a brake operation by pressing an inner pad and an outer pad toward a rotor by a caliper body including an inner pad pressing mechanism. In such a floating caliper disc brake apparatus, some brake devices have been suggested, which have a servo mechanism for amplifying and converting a circumferential brake torque generated in the rotor upon pressing the inner pad into an axial pressing force for pressing the inner pad toward the rotor. For example, Patent Document 1 discloses a first conventional art.
[Patent Document 1] JP-A-38-019671

The first conventional art disclosed in Patent Document 1 will be simply described with reference to Figs. 4(A) and 4(B). A movable member 102 is axially supported to a fixed support body 101 so as to be swingable via a pivot pin 125. When a piston 110 advances by introducing a pressure fluid into a fluid cylinder 109 installed in the movable member 102, an inner pad 105 presses a rotor 103 in a sliding manner, thereby generating a brake force. A reaction against a pressing force for pressing the inner pad 105 toward the rotor 103 generates swing motion of the pivot pin 125 of the movable member 102, thereby generating a pressing force for pressing an outer pad 106 toward the rotor 103. During the brake operation, a brake torque generated between the inner pad 105 and the rotor 103 in a circumferential direction of the rotor 103 is absorbed while being in contact with the fixed support body 101. On the other hand, a brake torque generated between the outer pad 106 and the rotor 103 is converted into a rotation moment of the pivot pin 125 without being in contact with the fixed support body 101 so that the rotor 103 is pressed. In this way, a servo mechanism is configured.

However, in the servo mechanism according to the first conventional art, since a servo force is applied to only the outer pad, a problem arises in that a lifetime of the outer pad is different from that of the inner pad or the rotor is bent toward a direction from the outer pad to the inner pad. For this reason, the present applicant has proposed a servo-type caliper disc brake capable of distributing an equivalent amount of servo force to the inner and outer pads and of obtaining a servo force larger than a servo force generated from only the outer pad (sees Patent Document 2).
[Patent Document 2] JP-A-2001-254769

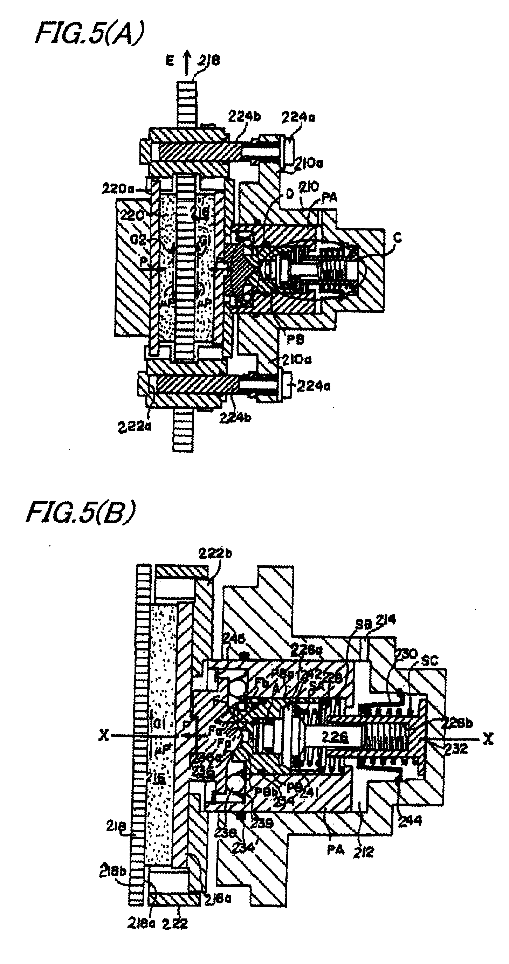

The invention is based on the technology of the servo-type caliper disc brake according to the second conventional art disclosed in Patent Document 2. The servo-type caliper disc brake will be simply described with reference to Figs. 5(A) and 5(B). When a brake hydraulic pressure is introduced into a hydraulic chamber 212 (Fig. 5(B)) of a caliper body 210, large and small pistons PA and PB are applied with the hydraulic pressure, and allow an inner pad 216 to advance via a roller 238 and a plug 236. At the same time, the caliper body 210 retreats so that a part of the caliper body 210 (Fig. 5(A)) located on the rear surface of the outer pad 220 presses an outer pad 220 toward a rotor 218. In this way, a brake operation is carried out, in which the rotor 218 is pressed by the inner and outer pads.

As shown in Fig. 5 (A), during the brake operation, a brake torque generated in a circumferential direction of the rotor 218 and applied to the inner pad 216 is used, and servo forces Fa and Fa' generated in an axial direction of the rotor 218 are equivalently distributed to the inner pad 216 and the outer pad 220 via the caliper body 210 by an adjuster mechanism C and a servo generation mechanism D (constituted by a slope surface formed in the front end of the piston PB and a slope surface formed in the plug 236) mounted to the front end of the piston PB.

### SUMMARY OF THE INVENTION

One or more embodiments of the present invention provide a servo disc brake device for improving the servo-type caliper disc brake according to the second conventional art, by improving a servo force efficiency of a servo mechanism, reducing an influence of a servo function due to a braking hydraulic pressure, and uniformly maintaining a relationship between a hydraulic pressure and a generated circumferential force so as to equivalently servo the inner and outer pads at the same time.

In accordance with one ore more embodiments of the invention, a servo disc brake device mounted in a floating caliper disc brake apparatus for performing a brake operation by pressing an inner pad (3) and an outer pad (4) toward a rotor (5) by a caliper body (1) including an inner pad pressing mechanism (8), is provided with: a servo mechanism (7) attached to the inner pad pressing mechanism (8) and for amplifying and converting a brake torque generated in a circumferential direction of the rotor (5) upon pushing the inner pad (3) to the rotor (5) into a pressing force for pressing the inner pad (3) toward the rotor (5) in an axial direction of the rotor (5). In the servo disc brake device, the servo mechanism (7) is provided with: a pair of members (9, 12) having slope surfaces (9A, 12A) relatively movable in the circumferential direction; and a roller (10) disposed between the slope surfaces (9A, 12A).

In the servo disc brake device, the servo mechanism (7) may be capable of adjusting an axial length thereof in the axial direction with respect to the inner pad (3).

In the servo disc brake device, the servo mechanism (7) and a piston (8) operated by a hydraulic pressure may be separately arranged in the circumferential direction.

In the servo disc brake device, the servo mechanism (7) and an actuator (8) operated by electric power or mechanical power may be separately arranged in the circumferential direction.

The servo disc brake device may further be provided with a balance mechanism which reduces a pressing force for pressing the inner pad by a the brake torque generated by the servo mechanism.

According to the embodiments of the invention, in a servo disc brake device in which a rotor is pressed by an inner pad and an outer pad by a caliper body including an inner pad pressing mechanism, a servo mechanism is attached to the inner padpressing mechanism so as to amplify and convert a brake torque generated in a circumferential direction of the rotor upon pressing the inner pad into a pressing force for pressing the pads toward the rotor in an axial direction, and the servo mechanism is configured such that a pair of members having slope surfaces relatively moving in the circumferential direction of the rotor is combined with a roller disposed between the slope surfaces. Accordingly, since a friction portion in the servo mechanism is small, it is possible to increase a lifetime of the servo mechanism. Additionally, since a highly efficient servo force basically generated from the brake torque at a low loss can be equivalently distributed to the inner and outer pads, it is possible to remove an abrasion difference between the inner and outer pads.

When the servo mechanism is configured to be capable of adjusting an axial length of the rotor with respect to the inner pad, it is possible to appropriately maintain the servo force at a normal time even when the inner pad is abraded more than a predetermined value. In addition, when the servo mechanism and an actuator operated by a hydraulic pressure are separately arranged on a circumference of the rotor, since the servo mechanism is not influenced by the hydraulic pressure when comparing with a case where the servo mechanism and the actuator constituting the inner pad pressing mechanism are combined with each other, it is possible to reduce an input range without a servo advantage in the servo mechanism, and thus to promptly start a servo function.

Then, when the servo mechanism and an actuator operated by electric power or mechanical power are separately arrange don a circumference of the rotor, as described above, it is possible to reduce an input range without a servo advantage in the servo mechanism, and thus to promptly start a servo function. Also, it is not necessary to provide a pipe and the like for a fluid, and thus to simplify a facility. In addition, when a balance mechanism is provided so as to reduce a pressing force for pressing the inner pad by using the brake torque generated in the servo mechanism, since it is possible to uniformly maintain a relationship between a hydraulic pressure and a generated circumferential force, it is possible to equivalently servo the inner and outer pads at the same time.

Other aspects and advantages of the invention will be apparent from the following description, the drawings and the claims.

### BRIEF DESCRIPTION OF THE DRAWINGS

Fig. 1 is a sectional view showing a servo disc brake device according to a first embodiment of the invention.
Fig. 2 is a sectional view showing a servo disc brake device according to a second embodiment of the invention.
Fig. 3(A) is a sectional view showing a servo disc brake device according to a third embodiment of the invention, and Fig. 3(B) is a sectional view of a balance lever.

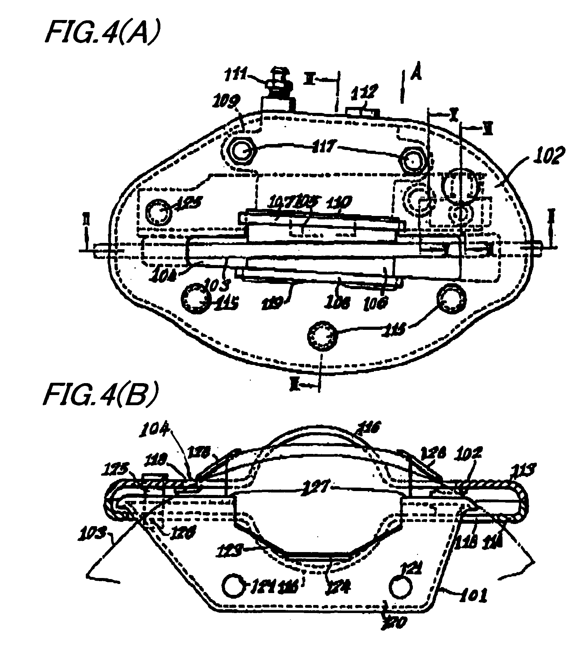

Figs. 4 (A) and 4 (B) are explanatory views showing a disc brake according to a first conventional art.
Figs. 5 (A) and 5(B) are explanatory views showing a servo-type caliper disc brake according to a second conventional art.

### <Description of Reference Numerals and Signs>

- 1:: CALIPER BODY
- 2:: SUPPORT MEMBER
- 3:: INNER PAD
- 4:: OUTER PAD
- 5:: ROTOR
- 6:: SLIDING PIN
- 7:: SERVO MECHANISM
- 8:: INNER PAD pressing mechanism (ACTUATOR)
- 9:: SLOPE PLATE
- 9A:: SLOPE SURFACE
- 10:: ROLLER
- 12:: SLOPE CYLINDER
- 12A:: SLOPE SURFACE
- 13:: HOLDER
- 14:: ADJUSTER SPINDLE
- 15:: ADJUSTER SPRING
- 16:: NUT
- 17:: THRUST PLATE
- 19:: TORQUE RECEIVING PLATE
- 20:: HYDRAULIC CHAMBER

### DETAILED DESCRIPTION OF THE EXEMPLARY EMBODIMENTS

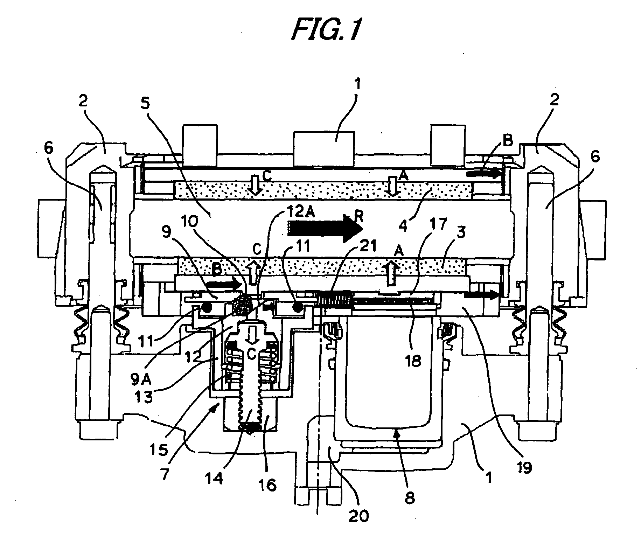

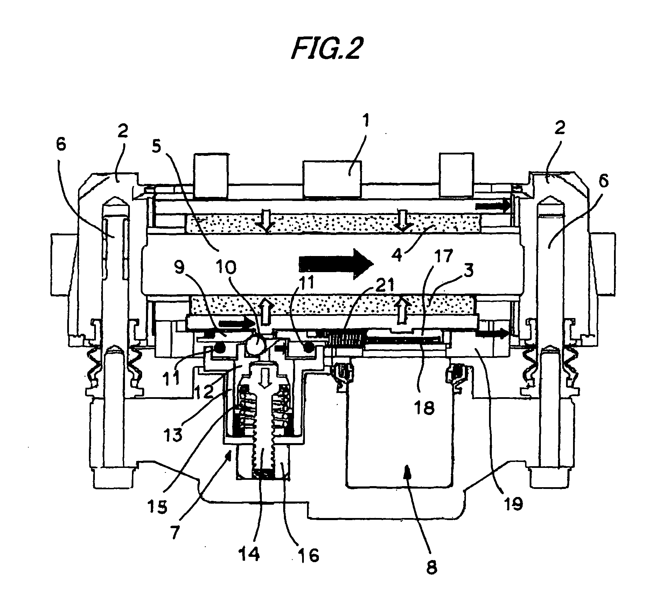

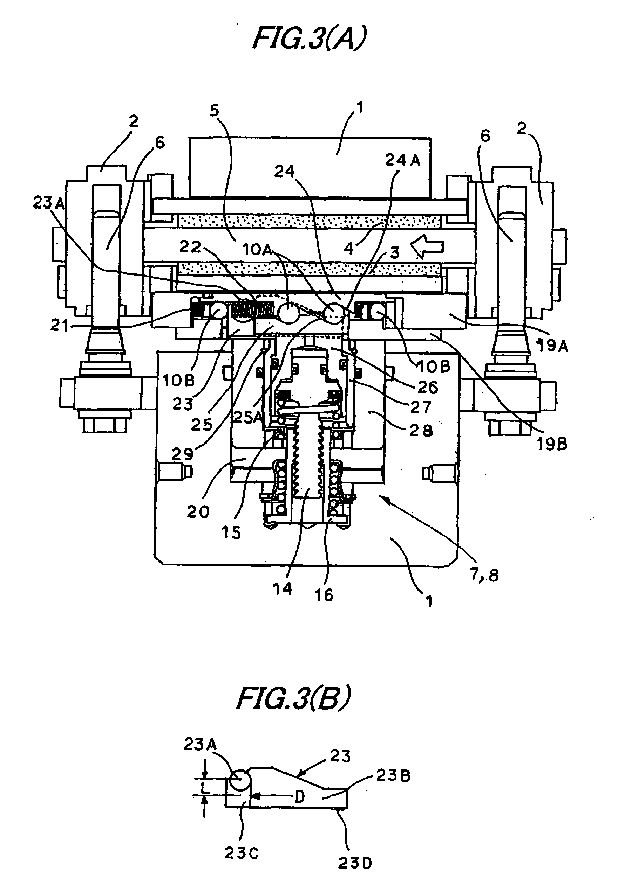

A servo disc brake device according to exemplary embodiments of the invention will be described with reference to the accompanying drawings. Fig. 1 is a sectional view showing a servo disc brake device according to a first embodiment of the invention. Fig. 2 is a sectional view showing a servo disc brake device according to a second embodiment of the invention. Fig. 3 is a sectional view showing a servo disc brake device according to a third embodiment of the invention. As shown in Fig. 1, as a basic configuration of the servo disc brake device according to the embodiments of the invention, in a floating caliper disc brake apparatus for performing a brake operation in which a rotor 5 is pressed by an inner pad 3 and an outer pad 4 by a caliper body 1 including an inner pad pressing mechanism 8, a servo mechanism 7 is attached to the inner pad pressing mechanism 8 so as to amplify and convert a brake torque B generated in a circumferential direction of the rotor 5 upon pressing the inner pad 3 into a pressing force C for pressing the pad toward the rotor 5 in an axial direction of the rotor 5. Also, the servo mechanism 7 is configured such that a pair of members 9 and 12 having slope surfaces 9A and 12A relatively moving in the circumferential direction of the rotor 5 is combined with a roller 10 disposed between the slope surfaces 9A and 12A.

### <First Embodiment>

As shown in Fig. 1, the caliper body 1 is configured to be capable of sliding inward or outward (upward and downward shown in Fig. 1) with respect to a support member 2 fixed to a stationary portion and the like of a vehicle body in terms of a sliding pin 6. That is, the caliper body 1 is installed in the support member 2 in a floating manner. The inner pad 3 and the outer pad 4 are respectively disposed inside and outside the rotor 5. The servo mechanism 7 and an actuator 8 serving as the inner pad pressing mechanism including a piston and a cylinder are mounted to an inner side of the caliper body 1 corresponding to a rear-surface side (the lower side in Fig. 1) of the inner pad 3. When the actuator 8 introduces a hydraulic pressure such as an oil pressure into a hydraulic chamber 20, a piston received in a cylinder (not shown) advances so as to perform a brake operation in which an axial pressing force A acts on the rotor 5 with a thrust plate 17, engaging with a thrust bearing 18 and the inner pad 3 in terms of unevenness, interposed therebetween. In terms of a reaction, the outer pad 4 obtains a pressing force in a direction indicated by the arrow A via the caliper body 1, thereby generating equivalent brake forces of the inner and outer pads 3 and 4 to sandwich the rotor 5.

In the first embodiment, as clearly shown in Fig. 1, the servo mechanism 7 and the actuator 8 constituting the inner pad pressing mechanism are separately arranged in the circumferential direction of the rotor 5. That is, they are arranged in parallel to each other in the drawing. The servo mechanism 7 and the actuator 8 separately arranged in the circumferential direction are desirably arranged on the same circumference at a predetermined gap therebetween, but may be arranged on the different circumferences. The servo mechanism 7 disposed in the caliper body 1 while being in parallel to the actuator 8 includes a slope plate 9 having a slope surface 9A engaging with the inner side (lower side in the drawing) of the inner pad 3, a roller 10, a slope cylinder 12 having a slope surface 12A capable of moving in a direction of a rotary shaft (hereinafter, axial direction) of the rotor 5, a holder 13 receiving the slope cylinder 12 therein, and an adjuster spindle 14 disposed in the slope cylinder 12 and urged outward by an adjuster spring 15. The adjuster spindle 14 is screw-connected to a nut 16 of which an inner end is not rotatable. When the inner pad 3 is excessively abraded, the adjuster spindle 14 advances in a rotating manner by the adjuster spring 15 and automatically fills an abrasion gap, thereby performing the gap adjustment.

When both inner and outer surfaces of the rotor 5 rotating in a direction indicated by the arrow R are pressed on the brake forces A and A generated by the inner pad 3 and the outer pad 4 in terms of the brake operation of the actuator 8, a brake torque B is generated in the circumferential direction of the rotor 5 by a predetermined friction force, so that the inner and outer pads 3 and 4 move together with the rotor 5. A rotation preceding-side end portion of the outer pad 4 comes into contact with the support member 2 to thereby absorb the brake torque. On the other hand, in the inner pad 3, the slope plate 9 moves in a rotation direction of the rotor 5 by the brake torque B to thereby compress a return spring 21. At the same time, the slope surface 9A of the slope plate 9 presses the slope surface 12A of the slope cylinder 12 in terms of a rolling action of the roller 10.

At this time, the brake torque B in the rotation direction of the rotor 5 is amplified and converted into an axial force C of the rotor 5 to be applied to the adjuster spindle 14. The axial force C is transmitted to the inner pad 3 via the slope plate 9 to be thereby added in a form of a brake force C with respect to the rotor 5. The force C applied to the adjuster spindle 14 is transmitted to the outer pad 4 via the caliper body 1 to be added in a form of the brake force C. Additionally, Reference numeral 19 denotes a torque receiving plate mounted with the thrust bearing 18 or the slope plate 9 so as not to come into contact with the inner pad 3 with a slight gap therebetween. The slope cylinder 12, the adjuster spring 15, the adjuster spindle 14, and the like set in advance in the holder 13 of the servo mechanism 7 are positioned to the torque receiving plate 19 in terms of two pins 11 and 11 so as to move in accordance with a pad abrasion. In this way, since the servo mechanism according to the first embodiment is not influenced by the hydraulic pressure when comparing with a case where the servo mechanism and the actuator constituting the inner pad pressing mechanism are combined with each other, it is possible to reduce an input range without a servo advantage in the servo mechanism, and thus to promptly start a servo function.

### <Second Embodiment>

Fig. 2 is a sectional view showing a servo disc brake device according to a second embodiment of the invention. In the first embodiment, the actuator separately disposed from the servo mechanism is operated by a hydraulic pressure, but in the second embodiment, the actuator is operated by electrical power or mechanical power. In the second embodiment, since only the structure of the actuator 8 is different from that of Fig. 1, the detailed description is the same as that of Fig. 1. In the second embodiment, as the actuator 8 for applying an initial brake force to the inner pad 3, there is provided the actuator 8 which is operated by electrical power ormechanical power and which does not require a pipe, a pipe passage, a hydraulic chamber, and the like. With such a configuration, the servo mechanism is not influenced by the hydraulic pressure like the first embodiment. Accordingly, an input range without the servo advantage in the servo mechanismbecomes small, thereby promptly starting a servo function and simplifying the facility.

### <Third Embodiment>

Fig. 3 (A) is a sectional view showing a servo disc brake device according to a third embodiment of the invention. In the third embodiment, unlike the first and second embodiments, the servo mechanism is integrally mounted with the actuator serving as the inner pad pressing mechanism to thereby realize a compact in size. Also, there is provided a balance mechanism for reducing a pressing force for pressing the inner pad by using the brake toque generated in the servo mechanism. The caliper body 1 is configured to be capable of sliding inward or outward with respect to the support member 2 fixed to the stationary portion and the like of the vehicle body in terms of the sliding pin 6. The inner pad 3 and the outer pad 4 are disposed inside and outside the rotor 5, respectively. The servo mechanism 7 and the actuator 8 serving as the inner pad pressing mechanism including the piston and the cylinder (the caliper body 1 constitutes the cylinder) are integrally mounted to the inner side of the caliper body 1 corresponding to the rear-surface side of the inner pad 3. When the actuator 8 introduces a hydraulic pressure such as an oil pressure into the hydraulic chamber 20, three pistons 26, 27, and 28 advance so as to perform a brake operation in which an axial pressing force acts on the rotor 5 via torque receiving plates 19B and 19A. In terms of a reaction, the outer pad 4 obtains a pressing force via the caliper body 1, thereby generating equivalent brake forces in the inner and outer pads 3 and 4 with the rotor 5 interposed therebetween.

When both inner and outer surfaces of the rotor 5 rotating in a direction indicated by the arrow (the rotation direction of the rotor 5 is opposite to those of the first and second embodiments) are pressed by the predetermined brake forces of the inner pad 3 and the outer pad 4 in terms of the brake operation of the actuator 8, a brake torque is generated in the circumferential direction by a predetermined friction force, so that the inner and outer pads 3 and 4 rotate together with the rotor 5. The rotation preceding-side end portion of the outer pad 4 comes into contact with the support member 2 to thereby absorb the brake torque. On the other hand, in the inner pad 3, a first ramp plate 24 moves in a rotation direction of the rotor 5 by the brake torque to thereby compress a return spring 22. At the same time, a slope surface 24A of the first ramp plate 24 presses a slope surface 25A of a second ramp plate 25 in terms of a rolling action of a roller 10A.

At this time, the brake torque in a rotation direction of the rotor 5 is amplified and converted into a servo force of an axial force of the rotor 5 being perpendicular thereto to be applied to the caliper body 1 via the nut 16 and the adjuster spindle 14. The servo force is transmitted to the outer pad 4 via the caliper body 1 to be thereby added in a form of a brake force with respect to the rotor 5. In addition, the servo force is transmitted to the inner pad 3 via the first ramp plate 24 to be thereby added in a form of a brake force with respect to the rotor 5. Additionally, Reference numeral 19 denotes the torque receiving plate which is mounted with the ramp plates 24 and 25, the roller 10A, the balance mechanism, and the like so as not to come into contact with the inner pad 3 with a slight gap therebetween. The first ramp plate 24 is rotatably disposed on the torque receiving plate 19 by the rollers 10B and 10B while being urged by a set spring 21 in an opposite rotation direction of the rotor 5.

As shown in Fig. 3(B), an U-shape balance lever 23 is disposed so as to support the first and second ramp plates 24 and 25 and the rollers 10A and 10A constituting a main part of the servo mechanism 7 in a surrounding manner. The balance lever 23 formed by a pressure receiving portion 23C and support shaft 23A extending in a direction perpendicular to a sheet surface of the drawing, and a pair of lever portions 23B and 23B extending from both end portions of the pressure receiving portion 23C to the right direction of the drawing. The support shaft 23A is supported to the torque receiving plate 19. With such a configuration, when a force D indicated by the arrow acts on the pressure receiving portion 23C by the second ramp plate 25 rotating together with the inner pad 3 due to the generated brake torque, a moment resulted from an arm L is generated about the support shaft 23A. Due to the moment, a front-end press portion 23D of the lever portion 23B returns the center piston 27 among the three pistons inward (downward in the drawing). In terms of the operation, a retainer 29 returns an outer piston 28 inward.

Accordingly, a brake force for basically generating a brake torque reduces, and the force D of the second ramp plate 25 acting on the balance lever 23 reduces. Thus, since the brake torque as a circumferential force generated by the inner pad 3 is equivalent to a force of the center piston 27 at a normal time, it is possible to uniformly maintain a relationship between the brake torque as the circumferential force and the brake force due to the hydraulic pressure. As a result, it is possible to simultaneously generate an equivalent amount of servo force from the inner and outer pads and to restrict a large servo force even when a large brake torque is generated by abnormal gaps between the rotor 5 and the inner and outer pads 3 and 4. Additionally, since a consumed liquid amount during the brake operation is only influenced by an amount obtained by subtracting a sectional area of the inner piston 26 from that of the outer piston 28, it is possible to set the consumed liquid amount to be small.

An automatic gap adjusting mechanism includes the adjuster spindle 14 which is urged outward (upward in the drawing) by the adjuster spring 15 received in the inner piston 26 and the nut 16 which is screw-connected to the inner end of the adjuster spindle 14 so as not to be rotatable. When the inner pad 3 is excessively abraded, the adjuster spindle 14 advances by the adjuster spring 15 in a rotating manner and automatically fills an abrasion gap, thereby performing the gap adjustment.

While the invention has been described referring to specific embodiments, within the spirit and the scope of the invention, the shape and the type of the actuator serving as the inner pad pressing mechanism may be appropriately selected from an actuator operated by a hydraulic pressure such as an oil pressure and an air pressure and constituted by a piston and a cylinder, an actuator operated by a spindle sent out by an electric motor, an actuator mechanically operated by a cammechanism or a linkage mechanism, and the like. Also, the shape of the caliper body (a shape in which the caliper body extends from the inner pad-side mounted with the inner pad pressing mechanism or the servo mechanism to the outside of the outer pad) may be appropriately selected. Also, the type and the sliding manner of the caliper body mounted to the support member may be carried out in terms of an appropriate sliding member instead of the sliding pin. Also, the manner in which the inner pad pressing mechanism and the servo mechanism are mounted to the caliper body may be appropriately selected. Also, the shape and the type (a configuration concerned with an angle of the slope surface, a movement manner of a member having the slope surface, a roller, and the like) of the servo mechanism for amplifying and converting the brake torque during the brake operation into the pressing force for pressing the pads toward the rotor in an axial direction may be appropriately selected. A configuration concerned with the inner pad pressing mechanism and the servo mechanism (an arrangement on the same circumference, a parallel separate arrangement on the different circumferences, or an integral combination of the inner pad pressing mechanism and the servo mechanism) may be appropriately selected. The shape and the type of an automatic gap adjusting member and a gap adjustment manner of the servo mechanism, and the shape, the type, and the operation manner (in the embodiment, the operation acts on the center piston among a plurality of pistons, but may act on the other outer pistons) of the balance mechanism may be appropriately selected. It should be understood that the above-described specifications are exemplary of the invention and are not to be considered as limiting.

## Claims

1. A servo disc brake device mounted in a floating caliper disc brake apparatus for performing a brake operation by pressing an inner pad (3) and an outer pad (4) toward a rotor (5) by a caliper body (1) including an inner pad pressing mechanism (8), the servo disc brake device comprising:
a servo mechanism (7) attached to the inner pad pressing mechanism (8) and for amplifying and converting a brake torque (B) generated in a circumferential direction of the rotor (5) upon pressing the inner pad (3) toward the rotor (5) into a pressing force (C) for pressing the inner pad (3) toward the rotor (5) in an axial direction of the rotor (5),
wherein the servo mechanism (7) comprises:
a pair of members (9, 12) having slope surfaces (9A, 12A) relatively movable in the circumferential direction; and
a roller (10) disposed between the slope surfaces (9A, 12A).

2. The servo disc brake device according to Claim 1, wherein the servo mechanism (7) is capable of adjusting an axial length thereof in the axial direction with respect to the inner pad (3).

3. The servo disc brake device according to Claim 1 or 2, wherein the servo mechanism (7) and a piston (8) operated by a hydraulic pressure are separately arranged in the circumferential direction.

4. The servo disc brake device according to Claim 1 or 2, wherein the servo mechanism (7) and an actuator (8) operated by electric power or mechanical power are separately arranged in the circumferential direction.

5. The servo disc brake device according to Claim 1 or 2, further comprising:
a balance mechanism which reduces a pressing force for pressing the inner pad by a the brake torque generated by the servo mechanism.
